# EUROPEAN PATENT SPECIFICATION

(11) **EP 1 701 667 B1**
(45) Date of publication and mention of the grant of the patent: **12.03.2008**
(21) Application number: 05705289.6
(22) Date of filing: 07.01.2005
(51) Int. Cl.: A61C 19/04

(54) **WIRELESS ROOT CANAL APEX LOCATOR**
DRAHTLOSER WURZELKANALSPITZENLOKALISATOR
DISPOSITIF DE LOCALISATION D'APEX DE CANAL RADICULAIRE SANS FIL

(30) Priority: 08.01.2004 US 535068 P
(43) Date of publication of application: 20.09.2006
(73) Proprietor: DENTSPLY INTERNATIONAL, INC., York, PA 17405-0872 (US)
(72) Inventor: MAXWELL, Randall, Broken Arrow, OK 74012 (US); GARROTT, Charles, E., Tulsa. OK 74114 (US)
(74) Representative: Hartz, Nikolai
(86) International application number: PCT/US2005/000562
(87) International publication number: WO 2005/070325

(56) References cited:
- WO-A-03/005930
- US-A- 5 902 105

## Description

### Technical Field

The present invention generally relates to dental apex locators. More particularly, the invention is an apex locator that has a data display unit.

### Background of the Invention

Conservative dentistry and oral pathology suggest therapeutic treatment of a carious tooth rather than extraction thereof. Consequently, the endodontic treatment technique of root canal operations involving removal of the pulp, treatment of the canal and filling thereof, are being carried out with increasing frequency.

In performing a root canal operation, it is extremely important for the dentist to accurately determine the length of the root canal when removing pulp therefrom and inserting a filling material therein. For instance, if the dentist should fail to reach the apex of the root canal, healthy tissue may be injured or the decayed pulp is allowed to remain which eventually may result in periodontitis or endodontis.

Generally, the endodontic treatment comprises the steps of opening the carious cavity, cutting the enamel caries, removing the coronal pulp, enlarging the root canal orifice, exploring the root canal, extracting the radicular pulp, enlarging the root canal, and filling the root canal. Normally, numerous probe instruments will be employed to perform this treatment method, including cleansers, reamers, files, and filling tools. Heretofore, the most complex, time-consuming and difficult step in the root canal operation has involved determining the depth of penetration of a reamer or file and precisely controlling and limiting the depth of such reamer or file so as not to penetrate either beyond the root apex or short thereof. One previous method of measuring the root canal length involved the insertion of a thin, flexible probe or explorer into the canal and performing x-ray of the carious tooth in order to determine the depth of penetration of the probe into the canal. Once the accurate measurement had been taken, successively used tools could be set to the proper penetration depth determined by the dentist.

Various instruments have been devised in the past for measuring probe penetration in a root canal, as evidenced by the disclosures of U.S. Patent Numbers 3,916,529; 3,993,044; 3,753,434; 3,894,532; 3,660,901; and, 3,901,216, however, none of the instruments disclosed by such patents have been completely satisfactory in indicating the position of the probe relative to the canal apex with a high degree of sensitivity and accuracy. In this respect, one of the principal of the problems associated with previous instruments relates to the fact that the meters used by such instruments for visually indicating the penetration depth of the probe includes too many graduations to clearly depict the critical point at which the probe actually reaches the canal apex but does not penetrate through such apex inadvertently. In order to overcome the above discussed deficiency, some prior art instruments have provided means for actuating an audible or visual alarm, such as a light, when the probe achieves penetration to a critical point immediately adjacent the apex of the root canal. This solution is unsatisfactory because the dentist is not provided with feedback regarding the rate at which the probe is approaching the apex of the canal and may result in the probe going beyond such apex in the event that the dentist's reaction time after actuation of the alarm is not sufficient to slow or discontinue insertion of the probe after the latter has reached a critical point adjacent the canal apex. Furthermore, the use of audible alarms is undesirable since sounds produced by such alarms may be difficult to distinguish in the case of high ambient background noise.

There fore, electronic apex locators have been commercially introduced. These devices employ an impedance measuring device that when connected to the lip of a patient receiving root canal therapy and an endodontic file in the canal of the root provides a signal corresponding to the distance from the apex of the root canal. The displayed value of the distance to the apex allows the dentist to effectively plan the root canal. A problem with such electronic apex locators has been the numerous cords or cables necessary to control the locator, supply needed power and the like. A need exists therefore, for a more compact electronic apex locator that does not require as many such connections or cables.
US 5902705 discloses a wireless electronic apex locator according to the preamble of claim 1.

### Summary of the Invention

The present invention is an electronic apex locator that has a wireless connection to a data display unit as disclosed in claim 1.

### Brief Description of the Drawings

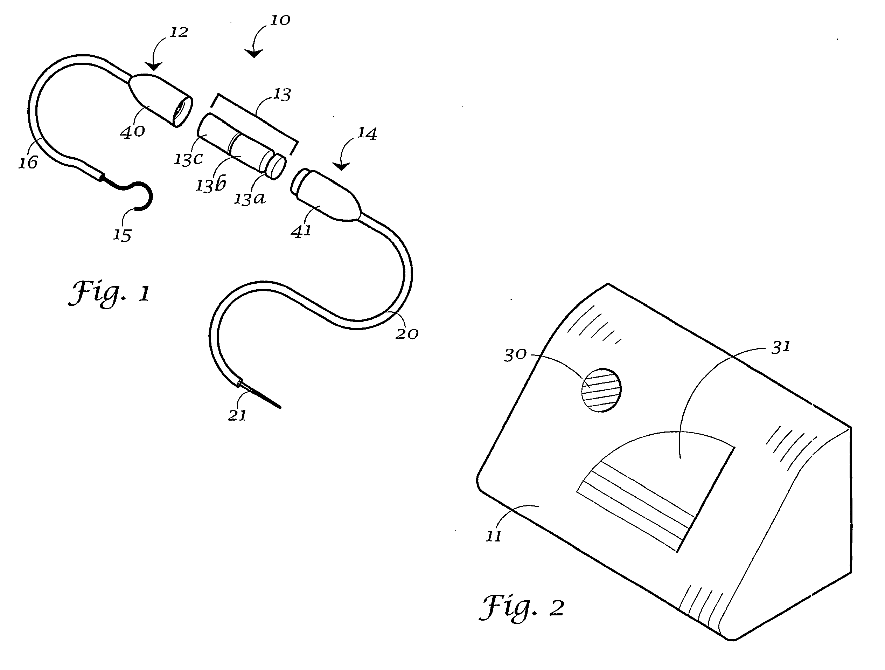

Figure 1 is an exploded view of a wireless apex locator according to the present invention.

Figure 2 is a perspective view of a display unit to be used with the wireless apex locator of Figure 1.

### Preferred Embodiments for Carrying Out the Invention

A wireless apex locator according to the present invention is generally designated by the number 10 on the attached drawings. By "wireless" it is meant that apex locator 10 is not physically connected to its associated display unit 11, by a means to be more fully discussed herein.

Apex locator has a lip module 12, and electronic module 13 and a probe module 14. Each module 12, 13 and 14 is preferably electrically and removably affixed to each other. By being removable, the various components can be serviced or cleaned separately.

Lip module 12 has a lip clip 15 for physically engaging a patient's lip in order to electrically ground the patient. Lip clip 15 is electrically connected to lip module 12 via a suitable cable 16.

Electronic module 13 includes a battery 13a, an impedance analyzer circuit 13b and a radio frequency transmitter 13c. Probe module 14 includes an electrical connecting cable 20 affixed to an endodontic probe 21.

Battery 13a is preferably rechargeable such as during sterilization or separately. Battery 13a may also be replaceable. Impedance analyzer circuit 13b evaluates the impedance between probe 21 and lip clip 15. Data therefrom is transferred by means of a suitable radio frequency to display unit 11, where it is in turn analyzed and displayed for use by the dental practitioner.

Lip module 12 preferably has a housing member 40 while probe module 14 preferably has a complementary housing member 41. Lip module housing member 40 and probe module housing 41 preferably are configured so that when they are physically engaged they form an electronic module housing for receiving and holding electronic module 13. This assembly will preferably automatically initialize and shut down when continuity is obtained or removed. This conserves battery power.

Display unit 11 has a graphic display 31 for representing data received from probe 21 via electronic module 13. Display unit 11 may also include appropriate user control interfaces, and also includes a complementary radio frequency receiver 30 that receives radio frequency signals from electronic module 13. Display unit 11 has an electronic circuit that conditions the signal and interprets the signal for display on graphic display 31.

In use apex locator 10 with its associated display unit 11 will be operated as follows:
a. The dentist will advance an endodontic file 21 toward the apex of the root canal;
b. The impedance of the probe module 14 will be determined and transmitted to the display unit 11 via transmitter 13c;
c. The display unit 11 will graphically display the impedance measurement on graphic display 31; and,
d. The display unit will optionally provide audible or other signals to notify the user of the progression in the canal. In this manner, the apex of a root canal is effectively located.

The apex locator as described herein is an advance in the art of such devices. The invention has been described and shown in the drawings without attempting to show all of the possible variations that are within the scope of the invention. The actual scope of the invention will be determined only by any attached claim.

## Claims

1. wireless dental apex locator (10) for use in determining the location of the apex of a patient's root, comprising:
(a) an electronic module (13) having
(a1) a battery power source (13a),
(a2) an impedance analyzer circuit (13b) and
(a3) a radio frequency transmitter (13c);
(b) a grounding module (12) having a clip (15) for grounding the patient;
(c) a probe module (14) having an endodontic probe (21); and
(d) an associated but not physically connected display unit (11) having a receiver for receiving radio frequency signals from said transmitter; said display unit having an electronic circuit that conditions the signals and interprets the signal for display on a graphic display (31),
**characterised in that** the grounding module has a housing member (40) and probe module (14) has a complementary housing member (41) which are configured so that when they are physically removably engaged they form an electronic module housing for receiving and holding electronic module (13).

## Patentansprüche

1. Drahtloser dentaler Spitzenlokalisator (10) für die Verwendung zum Bestimmen des Ortes der Wurzelspitze eines Patienten, umfassend:
(a) einen elektronischen Modul (13), der aufweist
(a1) eine Batteriestromquelle (13a),
(a2) eine Impedanzmessschaltung (13b) und
(a3) einen Hochfrequenzsender (13c);
(b) einen Erdungsmodul (12), der eine Halterung (15) zum Erden des Patienten aufweist;
(c) einen Sondenmodul (14), der eine endodontische Sonde (21) aufweist; und
(d) ein assoziiertes aber nicht physikalisch verbundenes Anzeigegerät (11), das einen Empfänger zum Empfang von Hochfrequenzsignalen aus dem Sender aufweist; wobei das Anzeigegerät eine elektronische Schaltung aufweist, die die Signale konditioniert und die Signale zum Anzeigen auf einem graphischen Anzeigegerät (31) übersetzt,
**dadurch gekennzeichnet, dass** der Erdungsmodul ein Gehäuseteil (40) aufweist und der Sondenmodul (14) ein komplementäres Gehäuseteil (41) aufweist, die so ausgestaltet sind, dass sie, wenn sie physikalisch lösbar verbunden sind, ein Gehäuse für den elektronischen Modul bilden, um den elektronischen Modul (13) aufzunehmen und zu halten.

## Revendications

1. Dispositif de localisation d'apex dentaire sans fil (10) à utiliser pour déterminer l'emplacement de l'apex d'une racine de patient, comprenant :
(a) un module électronique (13) comportant
(a1) une source d'alimentation par batterie (13a),
(a2) un circuit d'analyseur à impédance (13b) et
(a3) un émetteur à haute fréquence (13c),
(b) un module de mise à la masse (12) comportant une pince (15) pour mettre à la masse le patient,
(c) un module de sonde (14) comportant une sonde endodontique (21), et
(d) une unité d'affichage associée mais non physiquement connectée (11) comportant un récepteur destiné à recevoir des signaux à haute fréquence dudit émetteur,
ladite unité d'affichage comportant un circuit électronique qui conditionne les signaux et interprète le signal en vue d'un affichage sur un dispositif d'affichage graphique (31),
**caractérisé en ce que** le module de mise à la masse comporte un élément de logement (40) et un module de sonde (14) comporte un élément de logement complémentaire (41), lesquels sont configurés de sorte que, lorsqu'ils sont physiquement engagés de manière amovible, ils forment un logement de module électronique destiné à recevoir et contenir un module électronique (13).
